# EUROPEAN PATENT APPLICATION

(11) **EP 2 388 472 A1**
(43) Date of publication of application: **23.11.2011**
(21) Application number: 10425165.7
(22) Date of filing: 19.05.2010
(51) Int. Cl.: F03B 13/26, F03B 17/06

(54) **Submerged hydroelectric power generator with float assembly**

(71) Applicant: Hydrosub-Energy S.r.l., 21013 Gallarate (VA) (IT)
(72) Inventor: Mazzara, Roberto, 21013 Gallarate (Varese) (IT)
(74) Representative: Lunati & Mazzoni S.r.L.

(57) **Abstract**

It is provided a hydroelectric generator (1) comprising at least one propeller (2) adapted to be set in rotation around a rotation axis (2a) by a fluid, an alternator (3) adapted to convert the motion of the propeller (2) into electric energy and at least one immersion-emerging member (4) defining a filling volume (4a) suitable to be at least partly taken up by an aeriform substance, and to enable floating of the hydroelectric generator (1) when the filling volume (4a) is taken up by the aeriform substance.

## Description

The present invention relates to a hydroelectric generator of the type pointed out in the preamble of the first claim.

In particular, the hydroelectric generator is adapted to be disposed in a watercourse or stream such as a river or a channel, for converting the kinetic energy of the fluid into an electric energy. Alternatively, it can be disposed in the sea or in the ocean.

It is known that presently the search for electric-energy generating sources is in particular oriented to renewable sources. These sources in fact, due to their intrinsic characteristic, can regenerate and are not exhaustible, and use of same does not therefore jeopardise the natural sources for future generations.

Among the renewable energies there is the solar energy and the wind and water powers utilising the sun, the wind and the water, respectively. In particular, water can be exploited both through creation of an artificial basin in order the utilise the gravitational potential energy belonging to the fluid and by suitably canalising the water flow for exploiting the kinetic energy belonging to the water in motion.

In the first case, a basin is made by building a dam, namely a permanent barrier across a natural watercourse so as to create said basin. The water, thus stored, is conveyed downhill through forced ducts, so that its potential energy is converted into kinetic energy by virtue of the guide blades and the turbine. The kinetic energy is finally converted into electric energy, through an alternator.

This water exploitation however is not always possible due to the particular geological requirements necessary for creating a basin. In fact, dams are usually made close to valleys or other similar places where a water storage can be created through building of barriers.

In addition, creation of a dam is particularly expensive and long and expensive maintenance works are required in order to prevent it from bursting.

For the above reasons, plants directly exploiting the watercourse are becoming increasingly more frequent.

In said plants the current generator utilises the normal water flow, i.e. the kinetic energy typical of the watercourse, which is directly converted into electricity. The generator is usually fully placed into the water and preferably in the vicinity of the a riverbed.

The known art mentioned above has some important drawbacks.

In the last-mentioned case, the energy produced is greatly affected by the variations in the river flow. Therefore, due to shifting difficulties, watercourses characterised by almost constant water flows over the whole year are necessary, as they are able to ensure an appropriate flow for almost all the year.

In addition, maintenance of these generators is very complicated and expensive. In fact, as they are housed on the riverbed, the maintenance woks are required to be carried out underwater. Therefore intervention of scuba divers is necessary and they are obliged to operate under particularly demanding work conditions.

In conclusion, in case of failure, in known generators complicated and expensive intervention operations are required and the generator's idle time is particularly long.

Furthermore, hydroelectric generators presently known are usually fastened to the riverbed and therefore masonry structures are for example required, which involves a high environmental impact.

Finally, due to the fastening operations, generators are almost stationary, i.e. they can be hardly handled and moved and it is therefore practically impossible to change the plant's arrangement for adapting it to possible modifications of the watercourse.

A further problem is represented by the limited reliability of the generators, due in particular to the complicated mechanisms of the alternator.

Under this situation, the technical task underlying the present invention is to conceive a hydroelectric generator capable of substantially obviating the mentioned drawbacks.

Within the scope of this technical task, it is an important aim of the invention to conceive a hydroelectric generator that can be easily handled and displaced. Another important aim of the invention is to provide a generator on which maintenance interventions can be carried out with ease.

A further aim not of less importance is to obtain a reliable generator.

A still further aim is to obtain a hydroelectric generator characterised by a low environmental impact.

The technical task mentioned and the aims specified are achieved by a hydroelectric generator as claimed in the appended Claim 1.

Preferred embodiments are highlighted in the sub-claims.

The features and advantages of the invention are hereinafter clarified by the detailed description of a preferred embodiment of the invention, with reference to the accompanying drawings, in which:
**Fig. 1** shows a perspective view of the hydroelectric generator according to the invention;
**Fig. 2** is a sectional front view of the hydroelectric generator;
**Fig. 3a** shows a first configuration of the hydroelectric generator according to the invention;
**Fig. 3b** is a second configuration of the hydroelectric generator;
**Fig. 4** represents a sectional top view of the hydroelectric generator; and

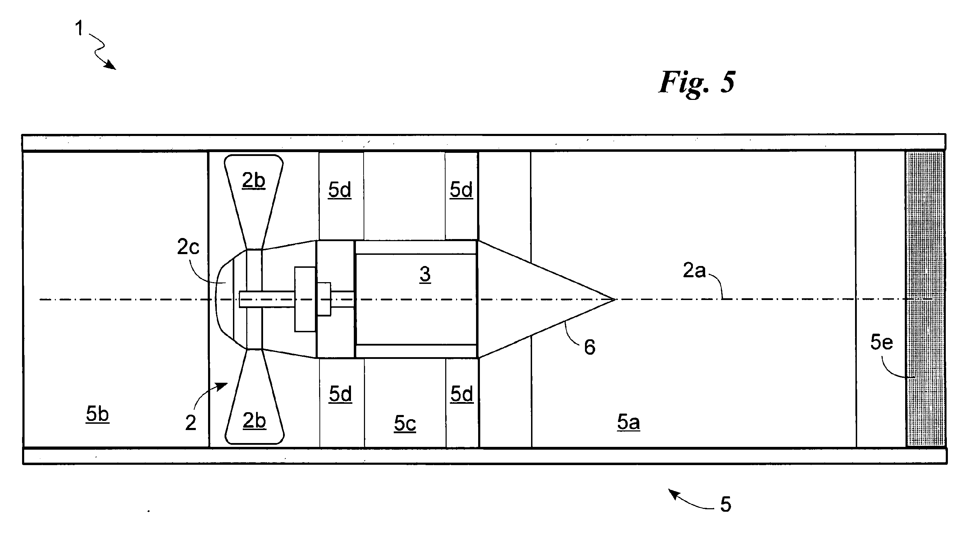

**Fig. 5** is a sectional side view of the hydroelectric generator according to the invention.

With reference to the mentioned figures, the hydroelectric generator according to the invention is generally identified by reference numeral **1.**

It is adapted to utilise the kinetic energy belonging to a fluid flow, usually water, and convert it into electric energy. In particular, the hydroelectric generator 1 is suitable to be disposed in the sea or, preferably, in a watercourse, such as a river or a channel.

It comprises a propeller **2** suitable to be set in rotation around a rotation axis **2a** by a fluid, an alternator **3** adapted to convert the turbine motion into electric energy, an immersion-emerging member **4** enabling the electric generator 1 to emerge from, or be immersed in the fluid, and a holding structure **5** adapted to structurally connect and contain the above mentioned components.

In particular, the alternator 3 is enclosed in a case 6 that together with propeller 2 defines a watertight chamber preventing the fluid from wetting the alternator 3 and damaging it. In order to offer the minimum flow resistance, case 6 advantageously has a cylindrical central portion in which alternator 3 is disposed, and an ogive-shaped tapering end so as to offer the smallest opposition to the fluid motion.

The propeller 2 comprises at least one blade **2b** that is suitably shaped so that it can exploit the fluid flow encountering it. In particular blades **2b** are preferably twelve in number.

The diameter of propeller 2 is substantially included between 1.5 m and 2 m and, advantageously, it is of 1.9 m. Said measurements and those reproduced hereinafter refer to a hydroelectric generator 1 adapted to be disposed in a watercourse, while those of a generator 1 suitable to be located in the sea are greater.

In addition, the geometry and number of blades 2b are of such a nature that propeller 2 can rotate in a water stream of an average speed, at a steady-state frequency substantially included between 50 revolutions/minute and 70 revolutions/minute and, preferably, almost equal to 45 revolutions/minute. Finally, the propeller 2 can have a removable plug **2c** placed at the central portion thereof and adapted to be removed for facilitating the maintenance operations. In detail, it is fastened to the remaining part of the propeller 2 in a releasable manner and preferably through a threaded coupling between the removable plug 2c and the remaining part of the propeller 2.

The propeller 2 is operatively connected to the alternator 3 by a suitable kinematic mechanism consisting of shafts, bearings and gear wheels for example, which transmits the motion between the two above-mentioned components. The alternator 3 therefore utilises the movement of propeller 2 for creating electric energy converting the kinetic energy into said electric energy. In particular, alternator 3 is of the permanent-magnet type. Preferably, if the angular speed is that mentioned above, no revolution-reducing or multiplying devices are present.

The holding structure 5 comprises an inlet opening **5a** conveying the flow to propeller 2, an outlet opening **5b** promoting evacuation of the fluid from the propeller, and a central body **5c** surrounding at least part of the assembly consisting of propeller 2 and alternator 3. In particular, the central body 5c surrounds the whole propeller 2.

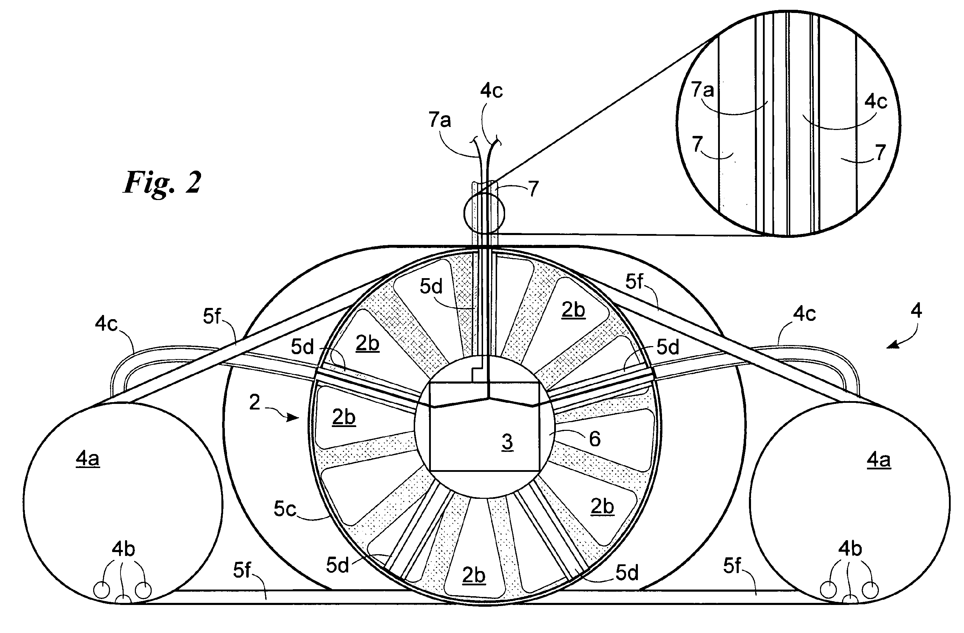

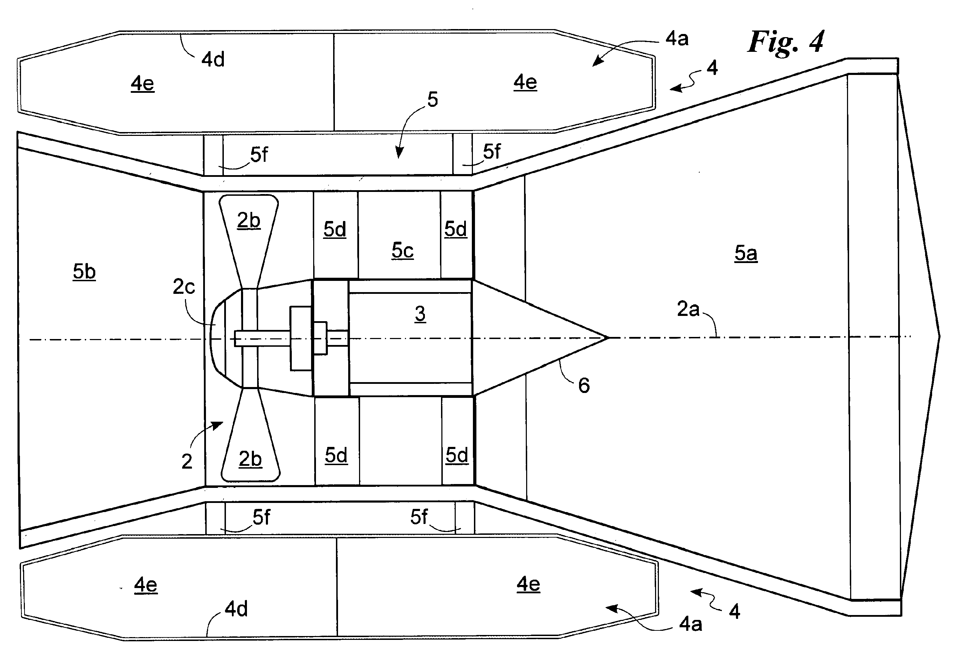

The central body 5c preferably has a cylindrical shape and its axis is almost coincident with the rotation axis 2a and is fastened to case 6 by wing rods **5d** (Figs. 4 and 2) disposed radially and adapted to steadily support the propeller 2 and alternator 3 in the correct position. In particular, the wing rods 5d have such a shape that they do not hinder the fluid flow.

The inlet opening 5a and outlet opening 5b have a major extension direction substantially coincident with the rotation axis 2a and, advantageously, their section varies along said direction. In particular, they have the minor section at the central body 5c and the major section at the ends of the hydroelectric generator 1.

Preferably, the starting section of the inlet opening 5a, i.e. that from which the fluid enters the hydroelectric generator 1, is larger than the final section of the outlet opening 5b, i.e. that through which the fluid comes out of the hydroelectric generator 1.

This particular geometry of the inlet opening 5a allows a high amount of fluid to be directed to propeller 2, while the outlet opening 5b creates a vacuum region downstream of propeller 2 that promotes both the fluid outflow and the return action exerted by the inlet opening 5a.

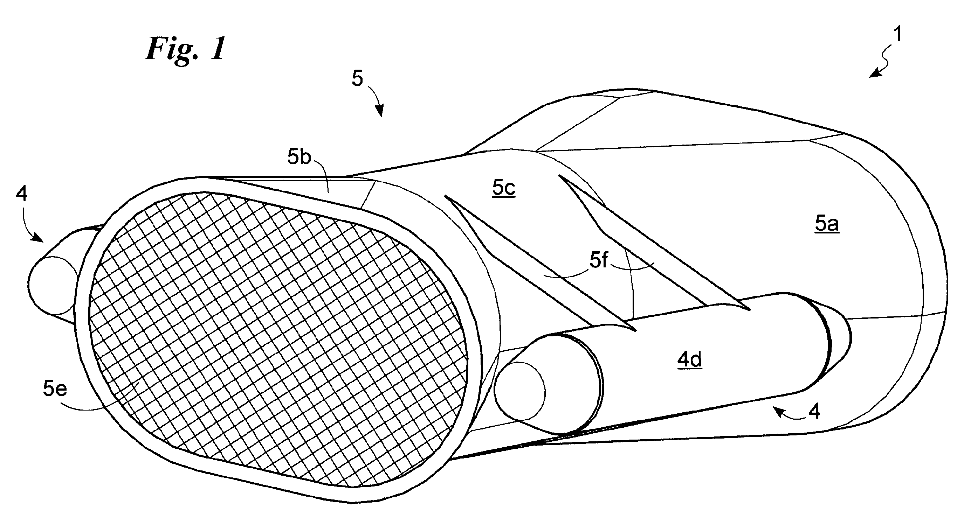

The inlet opening 5a and the outlet opening 5b are further provided with a protection barrier **5e** (Figs. 1 and 4) in the form of a grating, lamellae, or other similar element adapted to inhibit entry of outer bodies, such as fish, branches or the like into the holding structure 5.

Finally, due to the shape of the starting section of the inlet opening 5a, the outer bodies abutting against the protection barrier 5e can slip away without clogging the section for entry of the fluid into generator 1. In particular, its final part is wedge-shaped, i.e. it has the form of a polyhedron identified by a base and an edge parallel to the base and such conceived that its orthogonal projection on the base plane is a segment dividing the base in half. This edge is called apical edge and, as shown in Fig. 4, is placed to a greater distance from the central body 5c relative to the base of said wedge.

Finally, the inlet opening 5a, outlet opening 5b and central body 5c substantially have the same height, which is advantageously constant over the whole length of same. In detail, the central body 5c has a height substantially included between 1.5 m and 2.2 m and preferably almost equal to 2 m.

The holding structure 5 further comprises a supporting apparatus 5f adapted to connect the immersion-emerging member 4 to the remaining part of the hydroelectric generator 1. This supporting structure 5f consists of one o more suitably shaped plates or, alternatively, a plurality of rods, as shown in Figs. 1 and 2.

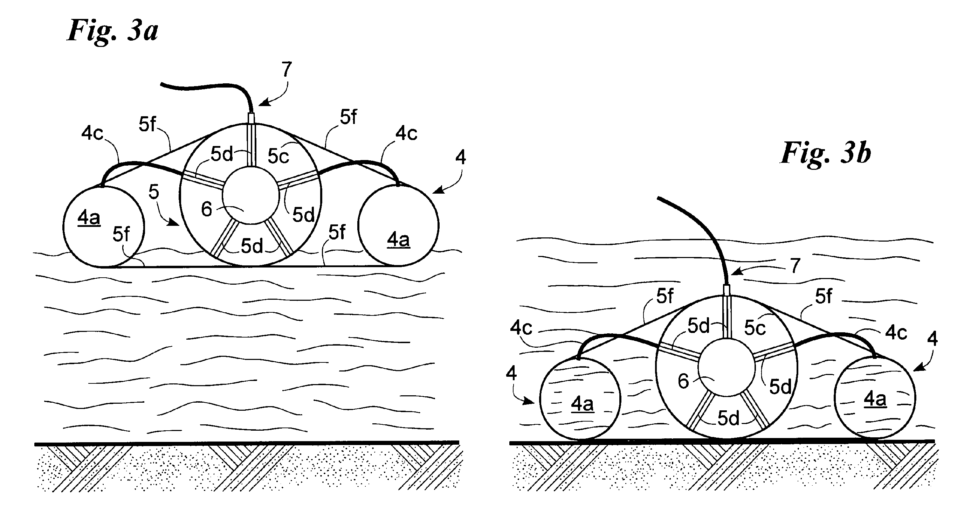

The immersion-emerging member 4 defines a filling volume **4a** adapted to be taken up at least partly by an aeriform substance such as air or a particular gas, helium for example. In particular, the amount of aeriform substance contained in member 4 varies, thus enabling a floating condition (Fig. 3a) to be defined in which the hydroelectric generator is kept afloat, and an immersion condition (Fig. 3b) in which generator 1 is adapted to be disposed at the bottom of the watercourse.

The immersion-emerging member 4 preferably consists of vessels **4d** of rubber or other similar material suitable to vary the filling volume 4a as a function of the amount of aeriform substance contained therein. In detail, in the floating condition the immersion-emerging member 4 has reached the maximum extension and is almost fully filled with the aeriform substance; in the immersion condition in which the filling volume 4b is almost devoid of aeriform substance the member 4 is compressed on itself.

Alternatively, as shown in Figs. 3a and 3b, the immersion-emerging member **4** consists of vessels 4d having an almost undeformable structure. They therefore define a filling volume 4a that does not vary on passing from the floating condition to the immersion condition and vice versa. In this case, the immersion-emerging member **4** is advantageously provided with suitable apertures **4b** (Fig. 2) adapted to enable entry of water into the member 4 and which can be equipped with suitable valves for controlling entry and exit of the fluid from the filling volume 4a.

The immersion-emerging member 4 is further provided with suitable ducts **4c** adapted to enable the volume of the aeriform substance in the two vessels 4d to be varied.

Suitable valves not shown in the figure can be used on the immersion-emerging member 4, which valves enable the aeriform substance to be directly evacuated from the immersion-emerging members 4, i.e. enable the aeriform substance to come out of the filling volume 4a without passing through ducts 4c.

The floating condition is therefore obtained by filling the volume **4a** with the aeriform substance, through ducts 4c, while the immersion condition occurs when the aeriform substance is caused to go out of said filling volume 4a inside which then the fluid flows.

The immersion-emerging member **4** is preferably equipped with two cylindrical vessels 4d with tapering ends, advantageously disposed on two opposite sides relative to turbine 2. In order to avoid oscillations and an incorrect positioning of the hydroelectric generator 1, ducts 4c allow the aeriform substance to be simultaneously admitted to and ejected from the two filling volumes 4a. They are further characterised by a single inlet (Fig. 2) so as to facilitate said simultaneous variation in the amount of aeriform substance within the filling volume 4a.

Each vessel 4d further has the inner volume advantageously divided into two distinct inner chambers **4e** each of which is provided with a duct of its own 4c adapted to enable two different pressures to be created in the two inner chambers 4e and therefore ensure correct axial positioning of the hydroelectric generator 1.

Finally, at said sole inlet, an electric cable **7a** can be advantageously provided or other element adapted to bring alternator 3 into communication with a mains for current passage. In particular, the four ducts 4c, one for each inner chamber 4e, and said cable 7a can be advantageously housed in a tube **7** or other similar element, so as to ensure that they will be more protected against vandalic acts. In particular, tube 7 is adapted to coat each of the four ducts 4c also in the part between the immersion-emerging members **4** and the central body 5c.

As an alternative to the above described generator, hydroelectric generators 1 can be made that are specific to the sea or other similar environments in which the fluid flow, due to tides for example, has not always the same way or direction.

In this case, in order to be able to utilise the fluid under any flow condition and with the greatest efficiency, generators 1 have a structure characterised by a central body 5c and two opposite inlet openings 5a so that the maximum incoming flow volume is ensured, irrespective of the way of the fluid stream. In addition, these generators are provided with two propellers 2 that are substantially coaxial and suitably spaced apart, each of them having blades such shaped that it is possible to exploit the flow in one of the two flow ways. In particular, the two propellers 2 are fastened to the same shaft with connection to the same alternator 3.

Then hydroelectric plants can be made which comprise a plurality of hydroelectric generators 1 that, alternatively, can be coupled to other types of electric generators. In particular, in plants characterised by several hydroelectric generators, if they are disposed in series, they are advantageously spaced apart from each other a distance substantially included between 35 m and 70 m. Preferably, such a distance is almost equal to 50 m.

Operation of the hydroelectric generator 1 described above as regards structure is as follows.

Before the hydroelectric generator 1 is put into the watercourse, the aeriform substance is introduced into the filling volumes **4a** and the hydroelectric generator 1 passes to the floating configuration (Fig. 3a). The hydroelectric generator 1 is then secured to a transport means such as a boat for example, and brought close to the placement point.

Once said point has been reached, alternator 3 is brought into electric connection with the mains through the electric cable 7a.

Subsequently, the hydroelectric generator 1 goes to the immersion configuration (Fig. 3b) and is disposed at the bottom of the watercourse. In detail, the aeriform substance is caused to come out of the filling volumes 4a through ducts 4c and, simultaneously, the fluid through apertures 4b enters the immersion-emerging member filling said volumes.

Should not the bottom be sufficiently even for the purpose of ensuring correct positioning of the hydraulic generator 1, so that the rotation axis 2a of the propeller is not substantially parallel to the fluid flow direction, the hydroelectric generator 1 can be secured to a raised position relative to the bottom. In this alternative case, generator 1 is anchored to the bottom by means of chains or other similar means adapted to ensure said parallelism and full immersion of the hydroelectric generator 1.

Once the hydraulic generator 1 has been positioned, the correct positioning of same is checked. In particular the pressure in each vessel 4d and more specifically in chambers 4e is adjusted.

The hydroelectric generator 1, once it has been anchored, begins working, i.e. the fluid sets the propeller 2 in rotation, which propeller, in turn, drives the alternator 3 that starts producing electricity and said electricity passes to the mains through the electric cable 7a.

Should maintenance operations or repositioning of the hydroelectric generator 1 be required, generator 1 comes back to the floating condition. In particular, through a compressor or other similar machinery suitably connected to duct 4c, the aeriform substance is introduced into the filling volumes 4a thus pushing the fluid out of the immersion-emerging member 4.

Once the hydroelectric generator 1 is in the floating configuration (Fig. 3a), all maintenance works can be carried out, which works are facilitated by the possibility of removing the removable plug 2c so that easy access to the inner members is allowed.

When maintenance is over, the hydroelectric generator 1 goes back to the immersion condition and is positioned again to the placement point.

The invention achieves important advantages.

In fact, a first important advantage is represented by the fact that the hydroelectric generator 1 can be handled and displaced with great ease, due to the possibility of changing from the immersion condition to the floating condition through easy operations. Therefore, a generator 1 can be easily handled and shifted between several different points of a watercourse or between different watercourses in order to ensure the maximum production of energy over the whole lifetime of generator 1.

In addition, the easy passage from the immersion condition to the floating condition allows maintenance works to be carried out with ease.

A not least advantage is represented by the high reliability of the hydroelectric generator 1. This aspect is ensured by the use of a permanent-magnet alternator 3 which is characterised by the absence of sliding contacts and the necessity to periodically replace the bearings alone.

Another advantage is represented by the reduced environmental impact of the hydroelectric generator 1 that only in some cases requires reduced anchoring systems.

A further advantage resides in that the hydroelectric generator 1 has a substantially zero environmental impact. In fact, the protection barriers 5e prevent outer bodies such as fishes, from entering the hydroelectric generator 1 thus damaging it, as well as possible vandalic acts to the detriment of the generator 1 itself. This advantage is further obtained by tube 7 that, surrounding the electric cable 7a, avoids damaging of same.

Finally, since the rotation speed of propeller 2 is not very high, small fishes possibly succeeding in passing through the protection barriers 5e can then go beyond propeller 2 passing therethrough while it is moving.

An important advantage is also represented by the possibility of adjusting the position of the hydroelectric generator 1, due to the presence of two chambers 4e in each vessel 4d, by varying the inclination of the rotation axis 2a in order to ensure the maximum efficiency of the generator itself.

The invention is susceptible of variations, all falling within the scope of the inventive idea. All of the details can be replaced by equivalent elements and the materials, shapes and sizes can be of any nature and magnitude.

## Claims

1. A hydroelectric generator (1) comprising at least one propeller (2) adapted to be set in rotation around a rotation axis (2a) by a fluid, an alternator (3) adapted to convert the motion of said propeller (2) into electric energy and **characterised in that** it comprises an immersion-emerging member (4) defining a filling volume (4a) suitable to be at least partly taken up by an aeriform substance, said immersion-emerging member (4) being adapted to enable floating of said hydroelectric generator (1) when said filling volume (4a) is taken up by said aeriform substance.

2. A hydroelectric generator (1) as claimed in claim 1, wherein said filling volume (4a) is adapted to be substantially fully taken up by said fluid defining an immersion condition.

3. A hydroelectric generator (1) as claimed in one or more of the preceding claims, wherein said immersion-emerging member (4) comprises two vessels (4d) and wherein each of said vessels (4d) has said inner volume divided into two inner chambers (4e).

4. A hydroelectric generator (1) as claimed in claim 3, comprising ducts (4c) adapted to enable the volume of said aeriform substance in said immersion-emerging members (4) to be simultaneously varied.

5. A hydroelectric generator (1) as claimed in one or more of the preceding claims, wherein said alternator (3) is of the permanent-magnet type.

6. A hydroelectric generator (1) as claimed in one or more of the preceding claims, wherein said propellers (2) are two in number and are substantially coaxial and wherein each of said propellers (2) is adapted to exploit a predetermined way or direction of moving forward of said fluid.

7. A hydroelectric generator (1) as claimed in one or more of the preceding claims, comprising a holding structure (5) including an inlet opening (5a) adapted to convey said fluid to said propeller (2), an outlet opening (5b) adapted to promote evacuation of said fluid from said propeller (2) and a central body (5c) having a smaller section than said outlet opening and said inlet opening.

8. A hydroelectric generator (1) as claimed in claim 7, wherein said inlet opening (5a) and outlet opening (5b) comprise a protection barrier (5e) adapted to prevent outer bodies from entering said holding structure (5).

9. A hydroelectric generator (1) as claimed in one or more of claims 7-8, wherein said inlet opening (5a) has a wedge-shaped configuration having the apical edge placed to a greater distance from said central body (5c) relative to the base of said wedge.

10. A hydroelectric generator (1) as claimed in one or more of claims 7-9, wherein said inlet opening (5a), outlet opening (5b) and central body (5c) substantially have the same height and said height is constant.

11. A hydroelectric generator (1) as claimed in claims 7-10, wherein said central body (5c) is of a height substantially included between 1.5 m and 2.2 m.

12. A hydraulic generator (1) as claimed in one or more of the preceding claims, wherein said propeller (2) comprises a number of blades (2b) equal to twelve.

13. A hydraulic generator (1) as claimed in one or more of the preceding claims, wherein said propeller (2) is adapted to rotate at a steady-state frequency substantially included between 30 revolutions/minute and 70 revolutions/minute.

14. A hydraulic generator (1) as claimed in one or more of the preceding claims, wherein said propeller (2) has a diameter substantially included between 1.8 m and 2 m.

15. A hydroelectric plant comprising a plurality of hydroelectric generators (1) as claimed in one or more of the preceding claims.
